**Europäisches Patentamt**

**European Patent Office**

**Office européen des brevets**

(19)

(11) **EP 1 355 276 A2**

(12) **EUROPEAN PATENT APPLICATION**

(43) Date of publication:
**22.10.2003 Bulletin 2003/43**

(51) Int Cl.$^7$: **G06T 15/50**

(21) Application number: **03251659.3**

(22) Date of filing: **18.03.2003**

| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (72) Inventor: **Wada, Shinya,** **c/o Sony Computer Entertainment Inc.** **Tokyo 107-0052 (JP)** |
|---|---|
| (30) Priority: **16.04.2002 JP 2002113951** **28.02.2003 JP 2003053106** | (74) Representative: **Turner, James Arthur** **D. Young & Co.,** **21 New Fetter Lane** **London EC4A 1DA (GB)** |
| (71) Applicant: **Sony Computer Entertainment Inc.** **Tokyo 107-0052 (JP)** | |

(54) **System and method for distance adjusted rendering**

(57) To provide a technique with which 3D images can be drawn more realistic. The present invention provides an image processing system including a DDA section (201) that generates drawing information for each pixel according to a display list which includes information about the position and color of each vertex of a polygon in a virtual 3D space, a point-of-view distance calculation section (202) for calculating the distance from a predetermined point in the virtual 3D space, an adjusting section (203) for adjusting the drawing information by updating the information which indicates the color of each pixel, based on the distance calculated by the point-of-view distance calculation section (202), and a frame memory interface section (207) that produces the adjusted drawing information to a predetermined frame memory (21). Thus, visual effects arc produced for the polygon based on the distance.

FIG. 2

**Description**

The present invention relates to image processing and, more particularly, to rendering of 3D images with computer graphics.

Many techniques are used to create realistic images in computer graphics. One example is an approach called "Z-buffering". Z-buffering is used to implement an approach, hidden surface removal, with which geometric models that are hidden behind other geometric models in a virtual 3D space are removed according to their distance in the depth direction from the point of view.

Z-buffering uses a Z-buffer in which a Z-value is stored for each pixel which is the minimum unit of drawing. The Z-value specifies the distance (depth) from the plane with its normal along the viewing direction, in which plane the point of view lies. This plane is herein referred to as "the plane of the eye". The color which is used to render geometric models on a display screen is based on the Z-value for each pixel. More specifically, the color of the geometric model with the smallest Z-value is selected for each pixel to perform hidden surface removal, making the geometric model that is closest to the plane of the eye appear at the front.

A known example of the application of Z-buffering is fogging. Fogging is used to specify the density of the fog depending on the Z-value and control the visibility of the geometric models. Geometric models with a larger Z-value which are further away from the plane of the eye will appear to be more obscured by the fog. Typically, fog color is blended with the color of geometric models at each pixel. This blending determines the color of the pixels that make up each geometric model with fog effects.

For example, textures are mapped onto a predetermined surface of a geometric model to be rendered with fog. Blending of the color of each texel, which is a dot in the texture image, with the fog color results in each geometric model being rendered with fog effects. This can be given by the following equation:

$$F = 1 - ((Z\text{-value}) - Z_{min})/(Z_{max} - Z_{min})$$

$$(\text{pixel color}) = F * (\text{texel color}) + (1 - F) * (\text{fog color}),$$

wherein $Z_{max}$ and $Z_{min}$ represent the maximum and minimum values for the Z-value, respectively. Thus, the color of each pixel varies based on the Z-value.

Another example of the application of Z-buffering is mip-mapping. Mip-mapping is a technique where different resolution versions of the same texture are used to map the texture at different Z-values. Mip-mapping controls the resolution of the texture which is determined by the level of detail (LOD). More specifically, geometric models with a larger Z-value which are further away from the point of view are rendered at a lower resolution with a lower LOD. Such geometric models with a lower LOD appear blurred. For example, different resolution versions of the same texture are provided at different Z-values. Mapping is performed by choosing the appropriate texture resolution for a given Z-value of the texture to be mapped. In other words, the texture to be mapped is specified using the resolution determined by LOD.

As apparent from the above, Z-values are conventionally used to provide visual effects, such as obscuring geometric models or making geometric models blurred. However, fogging and mip-mapping only produce the same visual effects on the plane parallel to the plane of the eye because the conventional Z-value specifies the distance between each pixel and the plane of the eye. For fogging for example, geometric models on the plane parallel to the plane of the eye are rendered with fog with a constant density. This means that all geometric models appear obscured in a similar manner everywhere on the parallel plane.

The fog density is, however, not constant on the plane parallel to the plane of the eye in the real world. For example, a point area above the plane that is closest to the point of view is more visible with less fog than the surrounding area. The same applies to mip-mapping that makes geometric models blurred. Thus, geometric models that are rendered with the conventional techniques are somewhat different from those of the real world.

Therefore, an object of the present invention is to provide a technique with which objects can be drawn more realistic with visual effects using Z-values than conventional techniques do. In order to solve the above-mentioned problems, the present invention provides the following image processing system.

An image processing system according to the present invention is an image processing system used to render geometric models in a virtual 3D space according to drawing information, the drawing information containing at least color information of each pixel which is the minimum unit of drawing, the image processing system comprising distance calculation means (202) for calculating the distance from a predetermined point to each pixel of a geometric model in the virtual 3D space; and adjusting means (203) for adjusting the drawing information for each pixel based on the distance that is calculated by the distance calculation means (202).

For example, when the predetermined point in the virtual 3D space is a point of view of looking at the geometric model, the adjusting means (203) adjusts the drawing information based on the distance from the point of view.

By a "geometric model" is meant any components that make up of a 3D image, such as objects in a virtual 3D space or polygons making up a predetermined surface of an object.

Conventionally, all pixels of the polygon lying in parallel with the plane of the eye have the same Z-value, that is, they are equally distant from the plane of the eye. When rendering such a polygon with fog, the polygon fades into the fog uniformly over the entire polygon. However, this does not apply to the real world. When a viewer looks at a flat plate lying in parallel to the plane of the eye, the portion of the flat plate that is closest to the point of view appears more visible with less fog. The portions of the flat plate further away from the point of view are hidden in the fog. When the center of the flat plate is the closest to the point of view, the fog becomes thinner around the center. The fog becomes denser as it approaches the periphery. In other words, polygons having the same Z-value appear to fade into the fog differently when looked at from the point of view. The density of the fog varies as a function of distance from the point of view.

The same applies to any technique, such as mip-mapping, of producing visual effects for images using Z-values. Different visual effects can be produced at different distance from the point of view, even with the same Z-value.

Various respective aspects and features of the invention are defined in the appended claims. Features from the dependent claims may be combined with features of the independent claims as appropriate and not merely as explicitly set out in the claims.

With respect to the above, embodiments of the present invention adjust the color of each pixel based on the distance from a predetermined point in the virtual 3D space. This produces more realistic 3D images.

In other words, in embodiments of the present invention, visual effects are produced based on the distance between each pixel and a predetermined point (e.g., point of view) rather than on the Z-value that specifies the distance between each pixel and the plane of the eye in order to produce more realistic images with a technique for producing visual effects such as fogging or mip-mapping. Consequently, when a viewer looks at an image of a flat plate lying in parallel to the plane of the eye, the portion of the image of the flat plate that is closest to the point of view appears more visible with less fog as in the real world. Likewise, the portions of the image of the flat plate further away from the point of view are hidden in the fog.

Where at least a portion of the geometric model is rendered with a texture, the adjusting means (203) may be configured to determine the resolution of the texture based on the distance from the predetermined point and adjust the drawing information according to the texture having the determined resolution. For example, the adjusting means (203) includes several textures at different resolutions used to render the geometric model. One resolution is specified for each one of the distances. The adjusting means (203) is configured to select one of the textures based on the distance. The drawing information is adjusted based on the color of the texel of the selected texture.

When fog that controls the visibility of the geometric model when it is rendered is applied to at least a portion of the geometric model, the adjusting means (203) may be configured to determine the density of the fog at each pixel to which the fog is to be applied based on the distance and adjust the drawing information based on the determined density of the fog. In addition, the adjusting means (203) may be configured to determine transparency of each pixel based on the distance and adjust the drawing information based on the determined transparency.

When the predetermined point on the virtual 3D space is a position where a light source locates that is used for shading of the geometric model, the adjusting means (203) may be configured to apply shading to the geometric model based on the distance from the light source and adjust the drawing information based on the shading result. For example, when at least a portion of the geometric model is rendered with a texture, the adjusting means (203) may be configured to determine the resolution of the texture based on the distance from the light source and adjust the drawing information according to the texture having the determined resolution. The drawing information is adjusted based on the color of the texel of the selected texture.

The above-mentioned image processing system of the present invention may comprise interpolation means (201) that produces the drawing information based on information about the position and color of each vertex of the geometric model, the drawing information including the color information and information which indicates the coordinates of each pixel of the geometric model. With such interpolation means (201), the distance calculation means (202) may be configured to calculate the distance based on the information which indicates the coordinates that is included in the drawing information and the adjusting means (203) may be configured to adjust the color information of each pixel that is included in the drawing information, based on the distance.

Another image processing system provided by the present invention comprises interpolation means (201) that produces drawing information based on a display list which includes information about the position and color of each vertex of a polygon in a virtual 3D space, the drawing information including information which indicates the position and information which indicates color of each pixel which is the minimum unit of drawing; distance calculation means (202) for calculating, for each pixel, the distance from a predetermined point in the virtual 3D space based on the information which indicates the position of each pixel included in the drawing information; adjusting means (203) for adjusting the drawing information by updating the information which indicates the color of each pixel, based on the distance that is calculated by the distance calculation means (202); and output means (207) that supplies the adjusted drawing information to a predetermined frame memory (21), wherein visual effects are produced for the polygon based on the distance.

Another image processing system provided by the present invention is an image processing system used to render geometric models in a virtual 3D space according to drawing information, the drawing information containing at least position information and color information in the virtual 3D space of each pixel which is the minimum unit of drawing, the image processing system comprising distance calculation means (202) for calculating the distance from a predetermined point to each pixel of a geometric model in the virtual 3D space based on the position information that is included in the drawing information; and adjusting means (203) for adjusting the color information that is included in the drawing information for each pixel based on the distance that is calculated by the distance calculation means (202).

The present invention also provides the following image processing method. This image processing method is performed by an image processing system (e.g., a computer that runs programs) that is used to render, on a predetermined frame memory (21), geometric models in a virtual 3D space according to drawing information, the drawing information containing at least color information of each pixel which is the minimum unit of drawing. The image processing method comprises calculating the distance from a predetermined point to each pixel of a geometric model in the virtual 3D space; and adjusting the drawing information for each pixel based on the calculated distance.

The present invention also provides the following semiconductor device. This semiconductor device is a semiconductor device (e.g., a processor that performs the processes defined by a program) that is used to render, on a predetermined frame memory (21), geometric models in a virtual 3D space according to drawing information, the drawing information containing at least color information of each pixel which is the minimum unit of drawing. The semiconductor device comprises distance calculation means (202) for calculating the distance from a predetermined point to each pixel of a geometric model in the virtual 3D space; and adjusting means (203) for adjusting the drawing information for each pixel based on the distance that is calculated by the distance calculation means (202).

Furthermore, the above-mentioned object can be solved by causing a computer to perform the following computer program of the present invention. This computer program is a computer program for use in implementing the following features in a computer that has a function of rendering, on a predetermined frame memory (21), geometric models in a virtual 3D space according to drawing information, the drawing information containing at least color information of each pixel which is the minimum unit of drawing, the features comprising: distance calculation means (202) for calculating the distance from a predetermined point to each pixel of a geometric model in the virtual 3D space; and adjusting means (203) for adjusting the drawing information for each pixel based on the distance that is calculated by the distance calculation means (202).

The invention will now be described by way of example with reference to the accompanying drawings, throughout which like parts are referred to by like references, and in which:

Fig. 1 is a view showing an entire configuration of an image processing system to which the present invention is applied;
Fig. 2 is a view showing details of a graphic synthesizer according to an embodiment of the present invention;
Fig. 3 is a view illustrating the distance between a point of view and a pixel;
Fig. 4 is a flow chart of image processing of the embodiment of the present invention;
Fig. 5 is a view that is used to describe the difference in visual effects at varying distances from the point of view; and
Fig. 6 is a view that is used to describe the difference in brightness at varying distances from a light source.

An embodiment of the present invention is described below with reference to the drawings.

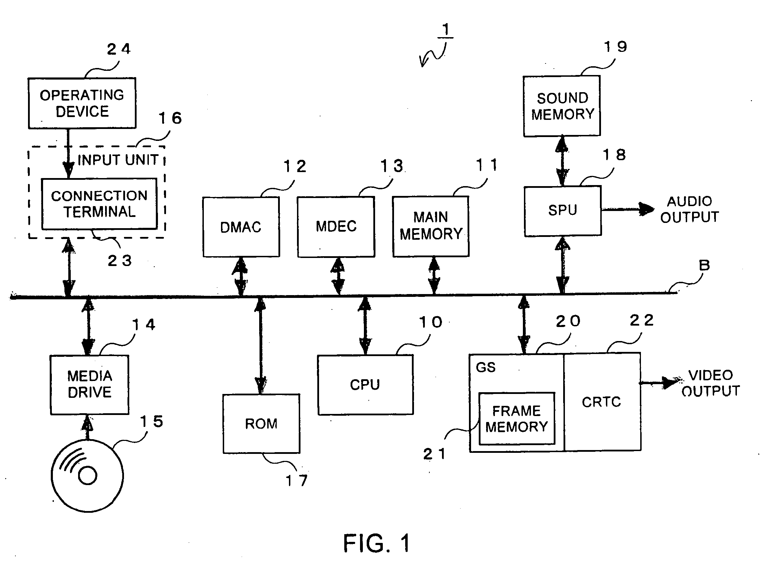

Fig. 1 is a view showing a configuration of an image processing system 1 to which the present invention is applied. The image processing system 1 has a function of loading programs and data from a media 15 such as a CD-ROM or a DVD-ROM to display images on a predetermined display unit and produce sounds through a speaker. The image processing system 1 may be implemented by a general-purpose computer, a video gaming device, or an entertainment device, which has image processing functions. In this embodiment, the following discussion will describe the image processing system 1 as an entertainment device.

The image processing system 1 comprises a central processing unit (CPU) 10, a main memory 11 which is a random access memory (RAM), a direct memory access controller (DMAC) 12, a moving picture experts group (MPEG) decoder (MDEC) 13, a media drive 14 into which the media 15 can be inserted, an input unit 16, a read-only memory (ROM) 17 on which programs such as BIOS are stored, a sound processing unit (SPU) 18, and a graphic synthesizer (GS) 20, which are connected to each other through a bus B. The SPU 18 reads sound data from a sound memory 19 and produces them as an audio output. The GS 20 includes a frame memory 21.

The GS 20 is connected to a CRT controller (CRTC) 22 which generates a video output signal. The video output signals are generated according to the NTSC (National Television Standards Committee) or PAL (Phase Alternation by Line) standard and are transmitted from the CRTC 22 to a predetermined display unit.

The CPU 10 is a semiconductor device that loads a boot program from the ROM 17 and starts executing the boot program to invoke the operating system during the start-up operations of the image processing system 1. The CPU 10 controls the media drive 14, reads application programs and data from the media 15 in the media drive 14, and stores them in the main memory 11. Furthermore, the CPU 10 performs geometry processing such as coordinate transformation and perspective transformation for various data read from the media 15 such as 3D graphics data (coordinates of vertices of each polygon) made up of several basic figures (polygons). The CPU 10 produces a display list containing geometry-processed polygon definition information (e.g., the position, a color, texture coordinates, an LOD, and a fog color of each of the vertices and the center of gravity of the polygon(s) used).

The GS 20 is a semiconductor device having a function of performing rendering processing according to the display list that is received from the CPU 10 and a function of drawing polygons in the frame memory 21. Since the frame memory 21 can also be used as a texture memory, any pixel image stored in the frame memory 21 can be pasted as a texture on the polygon to be drawn.

The SPU 18 is a semiconductor device which merges the sound data that are read from the sound memory 19, into an audio output signal. The DMAC 12 is a semiconductor device that controls DMA transfer to and from each circuit connected to the bus B. The MDEC 13 is a semiconductor device that operates in parallel with the CPU 10 to decompress data compressed, for example, in MPEG (Moving Picture Experts Group) or JPEG (Joint Photographic Experts Group) format.

The input unit 16 has a connection terminal 23 through which an input signal from an operating device 24 is received. The operating device 24 has several control buttons which enable the user to move or shape objects that are rendered on a display unit. The operating device 24 may be, for example, a keyboard, a mouse, or a controller of a gaming machine.

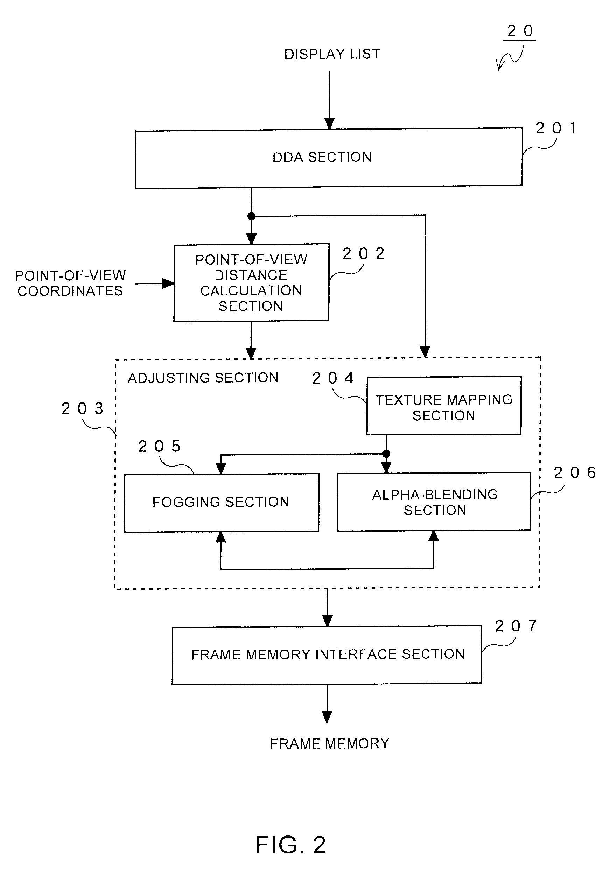

In the image processing system 1 of the present embodiment, the GS 20 reads and executes a desired computer program from a recording medium such as the ROM 17 and the media 15, thereby to form functional blocks that are required to achieve the present invention. These functional blocks include a digital differential analyzer (DDA) section 201, a point-of-view distance calculation section 202, an adjusting section 203, and a frame memory interface section 207. The adjusting section 203 comprises a texture mapping section 204, a fogging section 205, and an alpha-blending section 206. These are shown in Fig. 2.

The DDA section 201 is for generating drawing information according to the display list that is received from the CPU 10. The drawing information includes an X-coordinate value, a Y-coordinate value, a Z-value, a color, texture coordinates, and a fog color of each pixel. The polygon definition information in the display list typically includes information that is necessary for drawing operations, such as the position, a color, and texture coordinates each of the vertices and the center of gravity of the polygon(s). Thus, it is necessary to interpolate the information for the drawing at the pixels of each polygon other than the vertices and the center of gravity of the polygon, when it is drawn in the frame memory 21. The DDA section 201 interpolates the information and sends the result as the drawing information to the point-of-view distance calculation section 202 and the adjusting section 203. The drawing information may be information for pixels over the entire screen. Alternatively, it may be information for a single scan line or for a single pixel.

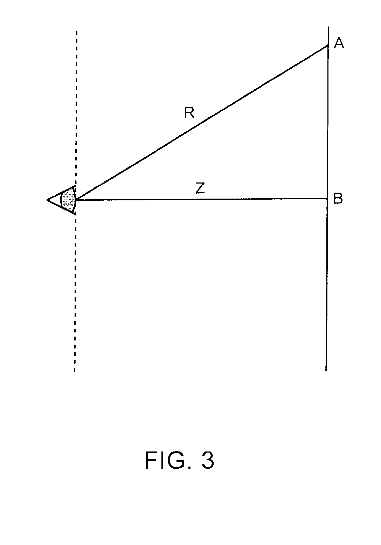

The point-of-view distance calculation section 202 calculates a distance R from the point of view to each pixel, based on the X-coordinate value, the Y-coordinate value, and the Z-value of each pixel included in the drawing information that is received from the DDA section 201. Fig. 3 is a view that is used to illustrate the distance R. In this figure, the polygon including a pixel A from which the distance R is to be calculated is in parallel to the plane of the eye that is indicated by the dotted line. The pixel in the polygon that is closest to the point view is designated as a pixel B.

The point-of-view distance calculation section 202 calculates the distance R by using coordinates of the point of view (hereinafter, referred to as "point-of-view coordinates") and the X-coordinate, the Y-coordinate, and the Z-value of the pixel A. The point-of-view coordinates are used when a geometric model is converted into an image which is looked at from the point of view in a virtual 3D space for example. The point-of-view coordinates may be included in the display list. The coordinates may be supplied directly or through the DDA section 201 from the CPU 10 to the point-of-view distance calculation section 202.

As apparent from Fig. 3, the point-of-view distance calculation section 202 may calculate the distance R from the X-coordinate value, the Y-coordinate value, and the Z-value of the pixel A as well as the X-coordinate value, the Y-coordinate value, and the Z-value of the pixel B, when the polygon lies in parallel to the plane of the eye. The pixel B is a pixel that indicates a point at which the surface of the polygon intersects at right angles with the viewing direction from the point of view. Therefore, the distance from the point of view to the pixel B is identical to the Z-value. The distance between the pixels A and B can be calculated from the X- and Y-coordinate values of these pixels. Accordingly, the distance R from the point of view to the pixel A can be calculated from the Z-value and the distance between the pixels A and B. The point-of-view distance calculation section 202 sends the calculated distance R of each pixel to the adjusting section 203.

The adjusting section 203 adjusts the drawing information that is received from the DDA section 201, based on the distance R calculated by the point-of-view distance calculation section 202. In this way, the adjusting section 203 produces desired visual effects on images to be displayed on the display unit. In this embodiment, the drawing information is adjusted for each pixel by the texture mapping section 204, the fogging section 205, and the alpha-blending section 206 to produce the visual effects.

The texture mapping section 204 performs mip-mapping based on the distance R from the point of view to each pixel which is received from the point-of-view distance calculation section 202. The texture mapping section 204 specifies the resolution of a texture to be mapped, based on the distance R from the point of view to each pixel, and the texture coordinates of each pixel included in the drawing information that is received from the DDA section 201. The texture mapping section 204 then replaces the texel color of the subject texture with the color of the relevant pixel. The color of each pixel (texel color) is notified to the fogging section 205 and the alpha-blending section 206.

The LOD which is used to determine the resolution of a texture can be given by the following equation:

$$LOD = \log_2 (1/Q) + K.$$

In the above equation, "K" specifies the position with a value of LOD equal to zero, and "Q" is defined as Q = 1/W wherein "W" is a divisor of the perspective transformation. In addition, "W" can be given by the equation:

$$W = (Z\text{-value})/R,$$

wherein "R" represents the distance R. Therefore, the above equation can be modified as follows:

$$LOD = \log_2 ((Z\text{-value})/R) + K.$$

The LOD determines the resolution of the texture. The corresponding texture is then selected. As apparent from the above equation, the LOD is lower at a larger distance R, providing a lower resolution of a texture.

The texture mapping section 204 has different resolution versions of the same texture to render geometric models. An appropriate texture resolution is selected according to the LOD.

Mip-mapping as a function of the distance R results in mapping of textures in different resolutions at various points on the same polygon. For example, in Fig. 3, the pixel B of the polygon that is closest to the point of view appears more clearly. The pixels further away from the point of view are blurred more and more as a function of the distance. Thus, more realistic images can be obtained.

The fogging section 205 determines the density of the fog at each pixel, based on the distance R from the point of view to each pixel which is received from the point-of-view distance calculation section 202. The fogging section 205 then changes the color of each pixel, reflecting the density of the fog.

By using the fog color included in the drawing information that is received from the DDA section 201, and the texel color of each pixel that is informed by the texture mapping section 204, the color of the pixel reflecting the density of the fog can be given by the following equation:

$$r\_n = 1 - (Z\text{-value})/R,$$

$$(\text{pixel color}) = (1 - r\_n) * (\text{texel color}) + r\_n * (\text{fog color}).$$

For pixels of which texel color is not specified, the color of these pixels may be contained in the drawing information and the fogging section 205 may blend the color in the drawing information with the fog color.

According to the above equation, a Z-value that is equal to the distance R will result in no fogging. Therefore, no fog color is blended with the texel color at the pixel B. The color of the pixel is determined only by the texel color without the fog color at the pixel B (Fig. 3). Pixels further away from the pixel B at a larger distance R are rendered with more fog color blended. The blended colors slowly transition to the fog color towards the most distant point from the pixel B. Thus, visual effects like a realistic scene can be produced.

In the above equation, fogging can be implemented by previously adding a predetermined color to each pixel to render all pixels in a single polygon with fog. The density of the fog can be controlled in percentage.

The fogging section 205 changes the drawing information that is received from the DDA section 201 to reflect the calculated color of the pixel in the drawing information. The new drawing information is supplied to the frame memory interface section 207.

The alpha-blending section 206 determines the transmittance of each pixel based on the distance R from the point of view to each pixel which is received from the point-of-view distance calculation section 202. The alpha-blending section 206 changes the color of the pixels to achieve the transmittance.

By using the color of the pixels designated by the drawing information from the DDA section 201 (destination color) and the texel color of each pixel which is notified by the texture mapping section 204, the color of the pixels with transmittance can be given by the following equation:

$$a\_n = 1 - (Z\text{-value})/R,$$

$$(\text{pixel color}) = (1 - a\_n) * (\text{destination color}) + a\_n * (\text{texel color}),$$

wherein a_n represents a transmittance which determines a percentage of alpha-blending. Pixels which are further away from the point of view at a larger distance R are rendered more opaque.

Alternatively, alpha-blending may be implemented according to the following equations:

$$(\text{pixel color}) = (\text{destination color}) * (1 + a\_n),$$

$$(\text{pixel color}) = (\text{destination color}) * (1 - a\_n).$$

With these equations, the brightness of the destination color can be controlled in alpha-blending.

According to the above equations, pixels closer to the point of view have a higher level of transmittance and are rendered more transparent. Those further away from the point of view have a lower level of transmittance and are rendered more opaque. This technique can be used to render naturally, for example, an object having a curved surface made of glass.

The alpha-blending section 206 changes the drawing information that is received from the DDA section 201 to reflect the calculated color of pixels. The new drawing information is supplied to the frame memory interface section 207.

The color of each pixel that is calculated by the fogging section 205 may be supplied to the alpha-blending section 206. In such a case, those colors may be used as destination colors for alpha-blending. Alternatively, the color of each pixel that is calculated by the alpha-blending section 206 may be supplied to the fogging section 205 to blend those colors with a fog color or colors.

The frame memory interface section 207 writes the drawing information modified by the adjusting section 203 into the frame memory 21. Consequently, images are drawn in the frame memory 21 using the latest drawing information that is modified by the adjusting section 203. The images drawn in the frame memory 21 are converted into a video output signal by the CRTC 22 and are supplied to the display unit. The images are then displayed on the display unit.

While the embodiment of the present invention has been described in conjunction with the case where the adjusting section 203 comprises the texture mapping section 204, the fogging section 205, and the alpha-blending section 206, one or more of them may be omitted. For example, the texel color of each pixel which is determined by the texture mapping section 204 may be used as the color of each pixel to change the colors of pixels included in the drawing information. Alternatively, other function of producing visual effects of images may be added. In other words, the adjusting section 203 may be configured to achieve a function of producing desired visual effects by controlling how images are rendered with what effect.

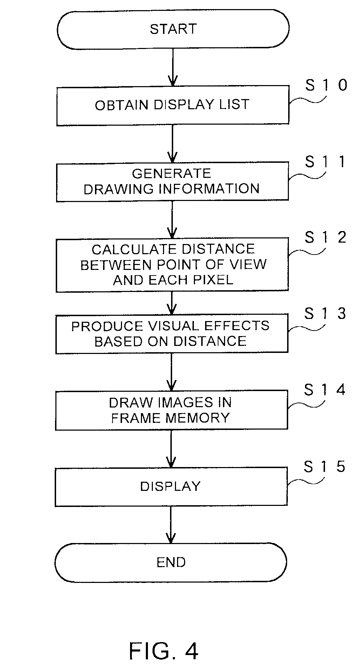

Operation of the above-mentioned image processing system 1 is then described with reference to Fig. 4. Fig. 4 is a flow chart illustrating a part of the image processing performed by the image processing system 1. The operation in this figure is carried out by the GS 20. It is noted that all necessary processing steps such as geometry processing are completed by the CPU 10 before the beginning of the procedure shown in Fig. 4 and that the display list used to render a predetermined geometric model is already created by the CPU 10.

In response to the reception of the display list created by the CPU 10 (step S10), the GS 20 directs the DDA section 201 to generate drawing information which includes, X-coordinate values, Y-coordinate values, Z-values, texel colors, LODs, and fog colors of pixels, using the received display list (step S11). The drawing information is transmitted from the DDA section 201 to the point-of-view distance calculation section 202 and the adjusting section 203.

The point-of-view distance calculation section 202 calculates a distance R from the point of view to each pixel, using the X- and Y-coordinate values and Z-values of the pixels included in the drawing information that is received from the DDA section 201 (step S12). The calculated distance between each pixel and the point of view is supplied to the adjusting section 203.

The adjusting section 203 changes the color of each pixel included in the drawing information, based on the distance between each pixel and the point of view that is notified by the point-of-view distance calculation section 202. The adjusting section 203 then produces visual effects reflecting these pixel colors (step S13). More specifically, the texture mapping section 204, the fogging section 205 and the alpha-blending section 206 in the adjusting section 203 perform mip-mapping, fogging, and alpha-blending based on the distance between each pixel and the point of view to modify pixel colors in the drawing information.

The texture mapping section 204 determines texture resolutions based on the distance between each pixel and the point of view, as described above. High resolution textures are used for shorter distances (closer to the point of view) and low resolution textures are used for longer distances (further away from the point of view). Texel colors of pixels with proper textures are then notified to the fogging section 205 and the alpha-blending section 206.

The fogging section 205 determines the density of the fog at each pixel based on the distance between each pixel and the point of view, as described above. The further away from the point of view (longer distance), the thicker the fog. Closer objects to the point of view (short distance) are more visible. The color of each pixel is determined according to the density of the fog.

The alpha-blending section 206 determines the transmittance depending on the distance between each pixel and the point of view, as described above. High levels of transparency are used for shorter distances (closer to the point of view) and low levels of transparency are used for longer distances (further away from the point of view). Then, the color of the pixels is determined according to their transmittance.

The adjusting section 203 writes the new drawing information with the modified pixel colors into the frame memory 21 through the frame memory interface section 207 (step S14). The CRTC 22 converts the drawing information in the frame memory 21 into a video output signal suited to an associated display unit and sends it to the display unit (step S15). Consequently, images are displayed on the display unit.

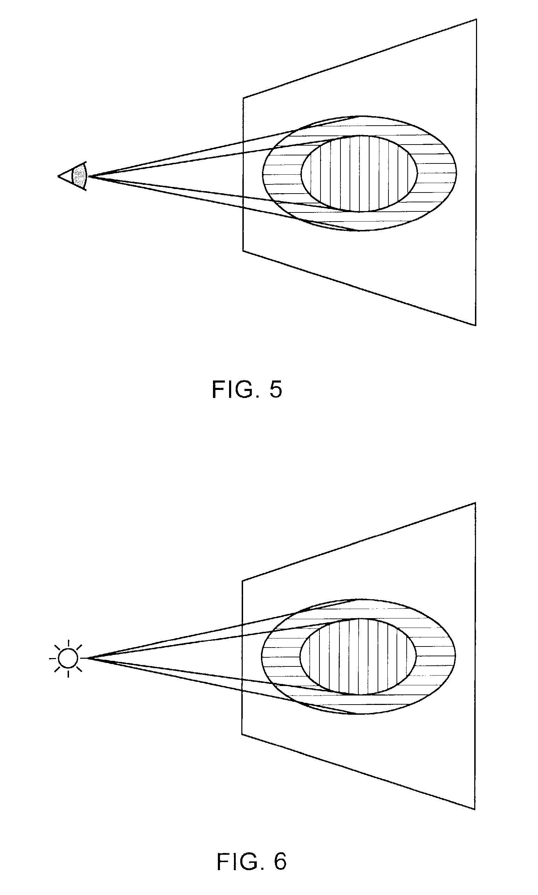

Fig. 5 shows an example of the image thus produced. This image represents a polygon that lies in parallel to the plane of the eye. In this polygon, regions having the same density of the fog or those having the same resolution of the texture are concentrically formed about the center point on the polygon that is closest to the point of view. Regions closer to the point of view are clearer and those further away from the point of view are blurred, as a function of the distance from the point of view. In other words, the single point that is closest to the point of view appears clearest. Any points that are away from the point of view at an equal radial distance appear with the same density of the fog or with the same resolution of the texture, according to the distance from the point of view.

As apparent from the above, mip-mapping as a function of distance from the point of view results in drawing of a more realistic scene. The closer to the eye, the clearer the image. The further away from the eye, the dimmer the image.

Since the density of the fog is determined based on the distance from the point of view, the closer to the point of view an object is, the clearer the image of it is, as in the realistic scene. In particular, more realistic image can be obtained when the distance from the point of view has much influence, as in graphics of underwater images.

The present invention allows the transparency to be varied depending on the distance because the distance from the point of view is used for alpha-blending. For example, the transparency at varying points on a transparent spherical object is determined by an angle between the viewing direction and a normal vector at each point. As the angle between the viewing direction and the normal vector gets closer and closer to 90 degrees, the transparency gets lower and lower. The angle between the viewing direction and the normal vector corresponds to the distance between the point of view and a point on the sphere. Therefore, the transparency can be changed based on the distance between the point of view and each point on the sphere, producing a more natural image of the spherical object.

In the above embodiment, some visual effects to be added to images considering the distance from the point of view are described. However, the distance from a light source may be taken into consideration instead of or in addition to the distance from the point of view, as shown in Fig. 6. With the distance from a light source, the resulting image is that portions on a polygon that are closer to the light source have higher levels of brightness and the portions on the same polygon that are further away from the light source have lower levels of brightness. This makes it possible to produce more realistic shading.

For example, different brightness versions of the same texture may be used according to the distance from the light source, as in the technique of mip-mapping. By choosing the appropriate texture, shading can be achieved easily based on distance from the light source.

As apparent from the above, according to the present invention, the drawing information is changed for each pixel based on the distance(s) from the point of view and/or from the light source to draw a geometric model. This provides a more realistic representation of the geometric model.

In so far as the embodiments of the invention described above are implemented, at least in part, using soft-

**EP 1 355 276 A2**

ware-controlled data processing apparatus, it will be appreciated that a computer program providing such software control and a transmission, storage or other medium by which such a computer program is provided are envisaged as aspects of the present invention.

**Claims**

1. An image processing system used to render geometric models in a virtual 3D space according to drawing information, the drawing information containing at least color information of each pixel which is the minimum unit of drawing, said image processing system comprising:

   distance calculation means (202) for calculating the distance from a predetermined point to each pixel of a geometric model in the virtual 3D space; and
   adjusting means (203) for adjusting the drawing information for each pixel based on the distance that is calculated by said distance calculation means (202).

2. The image processing system as claimed in Claim 1, wherein the predetermined point in the virtual 3D space is a point of view of looking at the geometric model, said adjusting means (203) being configured to adjust the drawing information based on the distance from the point of view.

3. The image processing system as claimed in Claim 1, wherein at least a portion of the geometric model is rendered with a texture, said adjusting means (203) being configured to determine the resolution of the texture based on the distance from the predetermined point and adjust the drawing information according to the texture having the determined resolution.

4. The image processing system as claimed in Claim 3, wherein
   said adjusting means (203) includes several textures at different resolutions used to render the geometric model, one resolution being specified for each one of the distances, said adjusting means (203) being configured to select one of the textures based on the distance.

5. The image processing system as claimed in Claim 1, wherein fog that controls the visibility of the geometric model when it is rendered is applied to at least a portion of the geometric model, said adjusting means (203) being configured to determine the density of the fog at each pixel to which the fog is to be applied based on the distance and adjust the drawing information based on the determined density of the fog.

6. The image processing system as claimed in Claim 1, wherein said adjusting means (203) is configured to determine transparency of each pixel based on the distance and adjust the drawing information based on the determined transparency.

7. The image processing system as claimed in Claim 1, wherein the predetermined point on the virtual 3D space is a position where a light source locates that is used for shading of the geometric model, said adjusting means (203) being configured to apply shading to the geometric model based on the distance from the light source and adjust the drawing information based on the shading result.

8. The image processing system as claimed in Claim 7, wherein at least a portion of the geometric model is rendered with a texture, said adjusting means (203) being configured to determine the resolution of the texture based on the distance from the light source and adjust the drawing information according to the texture having the determined resolution.

9. The image processing system as claimed in Claim 1, further comprising interpolation means (201) that produces the drawing information based on information about the position and color of each vertex of the geometric model, the drawing information including the color information and information which indicates the coordinates of each pixel of the geometric model,
   said distance calculation means (202) being configured to calculate the distance based on the information which indicates the coordinates that is included in the drawing information,
   said adjusting means (203) being configured to adjust the color information of each pixel that is included in the drawing information, based on the distance.

**10.** An image processing system comprising:

interpolation means (201) that produces drawing information based on a display list which includes information about the position and color of each vertex of a polygon in a virtual 3D space, the drawing information including information which indicates the position and information which indicates color of each pixel which is the minimum unit of drawing;

distance calculation means (202) for calculating , for each pixel, the distance from a predetermined point in the virtual 3D space based on the information which indicates the position of each pixel included in the drawing information;

adjusting means (203) for adjusting the drawing information by updating the information which indicates the color of each pixel, based on the distance that is calculated by said distance calculation means (202); and

output means (207) that supplies the adjusted drawing information to a predetermined frame memory (21), wherein

visual effects are created for the polygon based on the distance.

**11.** An image processing system used to render geometric models in a virtual 3D space according to drawing information, the drawing information containing at least position information and color information in the virtual 3D space of each pixel which is the minimum unit of drawing, said image processing system comprising:

distance calculation means (202) for calculating the distance from a predetermined point to each pixel of a geometric model in the virtual 3D space based on the position information that is included in the drawing information; and

adjusting means (203) for adjusting the color information that is included in the drawing information for each pixel based on the distance that is calculated by said distance calculation means (202).

**12.** An image processing method performed by an image processing system that is used to render, on a predetermined frame memory (21), geometric models in a virtual 3D space according to drawing information, the drawing information containing at least color information of each pixel which is the minimum unit of drawing, said image processing method comprising:

calculating the distance from a predetermined point to each pixel of a geometric model in the virtual 3D space; and

adjusting the drawing information for each pixel based on the calculated distance.

**13.** A semiconductor device that is used to render, on a predetermined frame memory (21), geometric models in a virtual 3D space according to drawing information, the drawing information containing at least color information of each pixel which is the minimum unit of drawing, said semiconductor device comprising:

distance calculation means (202) for calculating the distance from a predetermined point to each pixel of a geometric model in the virtual 3D space; and

adjusting means (203) for adjusting the drawing information for each pixel based on the distance that is calculated by said distance calculation means (202).

**14.** A computer program for use in implementing the following features in a computer that is used to render, on a predetermined frame memory (21), geometric models in a virtual 3D space according to drawing information, the drawing information containing at least color information of each pixel which is the minimum unit of drawing, the features comprising:

distance calculation means (202) for calculating the distance from a predetermined point to each pixel of a geometric model in the virtual 3D space; and

adjusting means (203) for adjusting the drawing information for each pixel based on the distance that is calculated by said distance calculation means (202).

**15.** A computer-readable recording medium in which a computer program as claimed in Claim 14 is stored.

FIG. 1

DISPLAY LIST

20

201

DDA SECTION

POINT-OF-VIEW
COORDINATES

POINT-OF-VIEW
DISTANCE
CALCULATION
SECTION

202

ADJUSTING SECTION

204

TEXTURE MAPPING
SECTION

203

205

FOGGING SECTION

ALPHA-BLENDING
SECTION

206

207

FRAME MEMORY INTERFACE SECTION

FRAME MEMORY

FIG. 2

FIG. 3

START

OBTAIN DISPLAY LIST — S 1 0

GENERATE DRAWING INFORMATION — S 1 1

CALCULATE DISTANCE BETWEEN POINT OF VIEW AND EACH PIXEL — S 1 2

PRODUCE VISUAL EFFECTS BASED ON DISTANCE — S 1 3

DRAW IMAGES IN FRAME MEMORY — S 1 4

DISPLAY — S 1 5

END

FIG. 4

FIG. 5

FIG. 6